# EUROPEAN PATENT SPECIFICATION

(11) **EP 1 646 260 B1**
(45) Date of publication and mention of the grant of the patent: **06.03.2013**
(21) Application number: 05021739.7
(22) Date of filing: 05.10.2005
(51) Int. Cl.: H04W 36/18, H04W 76/02

(54) **Control method, control program and mobile communication terminal device for soft handoff in a mobile communications system**
Steuerverfahren, Steuerprogramm und mobiles Kommunikationsendgerät zum sanften Weiterreichen in einem Mobilkommunikationssystem
Méthode de commande, programme de commande et terminal mobile de communication pour un transfert souple dans un système de communication mobile

(30) Priority: 06.10.2004 JP 2004294287
(43) Date of publication of application: 12.04.2006
(73) Proprietor: NEC Corporation, Minato-ku Tokyo 108-8001 (JP)
(72) Inventor: Furuya, Tomoki, Minato-ku, Tokyo (JP)
(74) Representative: Glawe, Delfs, Moll

(56) References cited:
- EP-A- 1 229 754
- WO-A-95/11559
- WO-A-96/05709
- WO-A-2004/080104
- GB-A- 2 343 330
- US-A- 6 108 322
- US-B1- 6 628 639

## Description

### BACKGROUNDS OF THE INVENTION

### 1. Field of the Invention

The present invention relates to a soft handover control method and a mobile communication terminal device in a mobile communication system using Code Division Multiple Access (CDMA) according to respective preambles of claims 1 to 3.

### 2. Description of the Related Art

In a mobile communication system, a base station in charge of communicating with a mobile communication terminal device, such as a mobile phone, is located in each area, and when the mobile communication terminal device communicates while moving across a plurality of areas, a handover control is performed, which switches the base station to which the mobile communication terminal device is wirelessly connected according to the movement of the mobile communication terminal device, in order to prevent the communication from being interrupted.

In particular, in the mobile communication system that uses CDMA, a soft handover method is employed, in which a mobile radio terminal taking advantage of CDMA sends and receives a signal between two or more base stations at the same time, thereby establishing simultaneously two or more communication paths for one call, to maintain continuity of the call (See Japanese Patent Laid-open (Kokai) No. 2001-238248, and Japanese Patent Laid-open (Kokai) No. 2004-180205).

A soft handover control method of the art is exemplarily known from EP 1 229 754 A and US 6 628 639 B1.

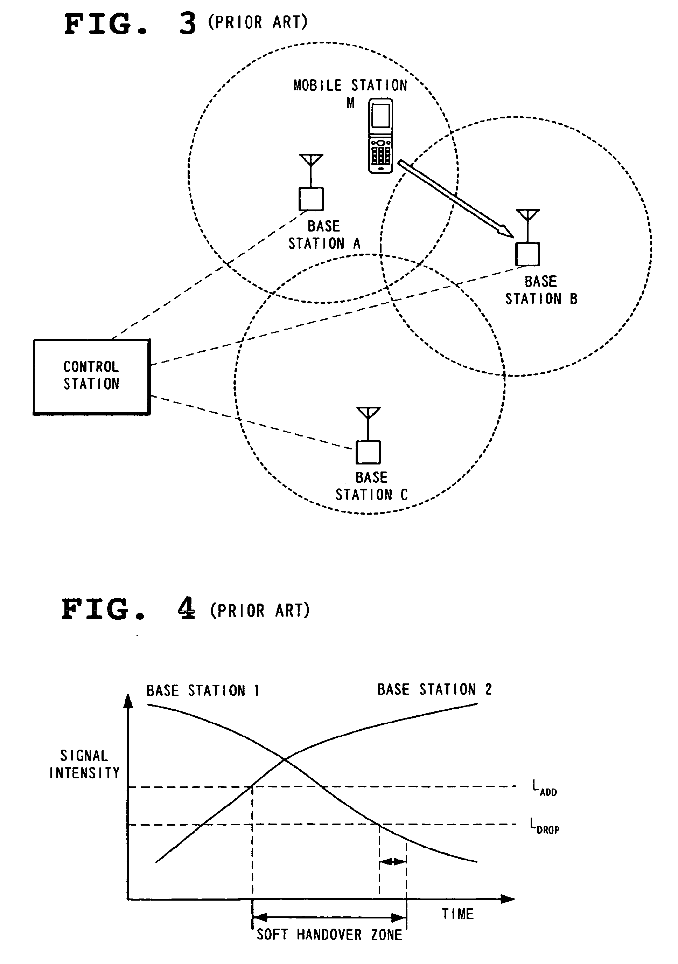

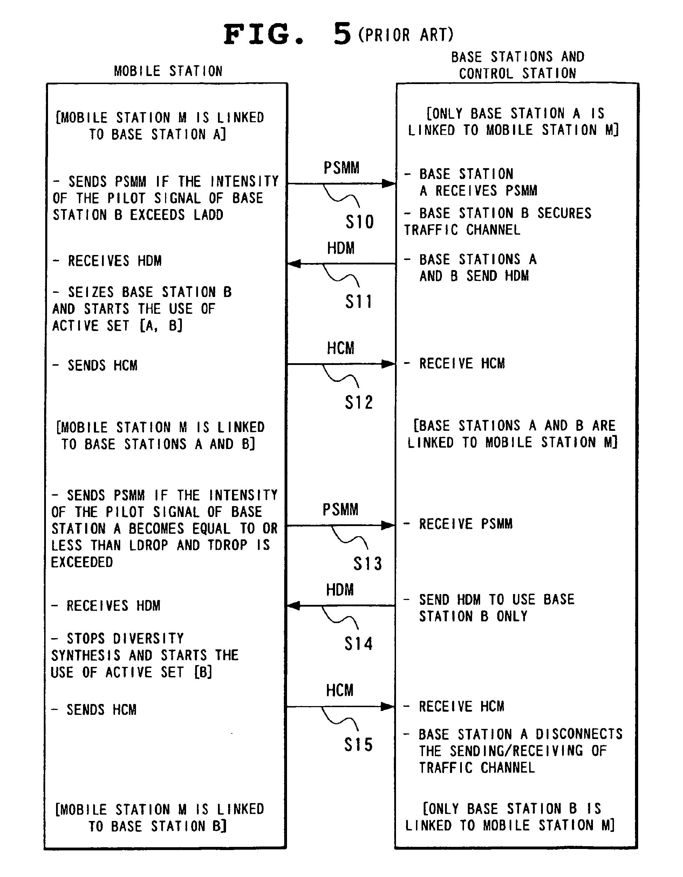

Fig. 3-5 illustrate one example of conventional soft handover control technology, in which Fig. 3 shows a schematic diagram illustrating the partial configuration of a mobile network using CDMA, Fig. 4 shows a timing chart of a soft handover operation, and Fig. 5 shows a flow chart of the soft handover operation. The outline of the soft handover control operation will now be described, with reference to Fig. 3-5.

A mobile station (e.g. mobile phone) M that is making a call to a base station A is always monitoring a pilot signal from each base station. If the mobile " station M moves from an area of the base station A to an area of a base station B adjacent to the base station A during its call, causing the pilot signal from the base station B to become greater than the threshold LADD for channel connection, the mobile station M sends a pilot signal measurement message (PSMM) signal to the base station A (S10).

When the base station A receives the PSMM signal, the signal is sent to a control station, which, in turn, instructs the base station B to assign a call channel. The base station B starts sending traffic on a downlink traffic channel, and seizes an uplink traffic channel. Then, to allow the mobile station M to use both base stations A and B, the base station B sends a handover direction message (HDM) signal to the mobile station M (S11).

Upon receiving the HDM signal and seizing the base station B, the mobile station M moves the base station B into an Active Set, and sends a handover completion message (HCM) signal to both base stations A and B (S12). In this way, the mobile station M establishes communication paths to, and starts communicating with, the base stations A and B, completing the handover. The Active Set means a collection of base stations with which the mobile station has established a communication path.

If the intensity of the pilot signal of the base station A becomes equal to or less than LDROP while the mobile station M is making a call to the base stations A and B, and this state continues for a time period of TDROP or longer, the mobile station M sends a PSMM signal for the pilot signal of the base station A to the base stations A and B (S13). The base stations A and B, which have received the PSMM signal, send the mobile station M an HDM signal that indicates to use the base station B only (S14).

The mobile station M, which has received the HDM signal, stops the reception by diversity synthesis from the base station A, moves the base station A into a Neighbor Set, and sends the HCM signal to the base stations A and B (S15). The Neighbor Set means a collection of candidate base stations that can be added to the Active Set. When the base stations A and B receive the HCM signal, the traffic channel assigned to the base station A is deassigned. Therefore, the communication continues thereafter using the RL with the base station B.

In a W-CDMA mobile communication system, before the mobile station performs call connection processing, i.e., in the IDLE state, in the CELL_PCH (Paging Channel) state, in which a paging signal is being sent on a downlink common channel, or in the CELL_FACH (Forward Access Channel) state, in which control information and user data are being sent on the downlink common channel, communication is through a common channel only, such that only one base station (Radio Link, hereafter referred to as RL) (1RL) is connectable, whereas, when a call connection processing starts, and the state transitions to a CELL_DCH (Dedicated Channel) state, in which the user data start to be sent on a bidirectional channel, communication with 2RL and 3RL (soft handover state) becomes possible.

Thus, immediately after the mobile phone using W-CDMA from before performing the call connection operation, i.e., in the IDLE, the CELL_PCH, or the CELL_FACH state, started call connection operation and transitioned to the CELL_DCH state, in particular, the handover event to add an RL to be connected occurs more easily, and the additional handover event is performed in priority to a call connection sequence.

In this manner, conventionally, when a handover event to add an RL occurs, the handover operation is performed in priority to the call connection sequence, raising the problem of the call connection operation being postponed and leading to extra time to connect a call. In addition, after an RL has been added and the soft handover state has been entered, if a handover event to remove the first RL occurs, it takes even more extra time to perform the call connection operation.

As means to bypass these problems, a method is considered, which imposes a limitation that prevents the handover event from occurring during the call connection operation, and performs the call connection operation in priority. In this case, if the electric field level of the RL connected at the start of the call connection operation is in a good enough condition, it is possible to complete the call connection within a short time; however, there is a problem that, if the electric field level of 1RL connected at the start of the call connection is low, the call connection operation itself will fail. Because the value of the above-described threshold LADD to connect a channel is generally set to be a relatively low value such that the mobile station can rapidly secure the 1RL, the call connection operation may fail due to the above-described limitation.

Thus, in the conventional soft handover control method, when a handover event occurs during a call connection operation, if the handover sequence is performed in priority to the call connection sequence, there is the problem that it takes as much extra time to connect a call as it took to perform the handover operation, and if the call connection sequence is executed in priority to the handover sequence, there is the problem that the call connection may fail.

### SUMMARY OF THE INVENTION

In view of the above-described problems, an object of the present invention is to provide means for minimizing the effect on the call connection operation time and at the same time preventing a call connection from failing, when a handover event occurs during a call connection operation.

This object is achieved by the soft handover control method according to claim 1.

In the soft handover control method there is provided a control upon detection of the occurrence of a handover event while a mobile phone using CDMA is performing a call connection operation, of switching between giving priority to the continuation of the call connection sequence and giving priority to the handover sequence, depending on the electric field level of the currently connected Radio Link (RL).

If the electric level of the currently connected Radio Link (RL) is greater than the minimum value of the electric level required for the call connection to succeed, the handover operation is interrupted and the call connection sequence is continued by priority, and if it is equal to or lower than the minimum value of the electric level required for the call connection to succeed, the handover sequence is performed by priority, and the call connection sequence is continued after a soft handover state is entered.

Furthermore there is provided a mobile connection terminal according to claim 2.

A characteristic of the mobile connection terminal device using CDMA of the present invention is to comprise a pilot signal level measurement unit which periodically receives a pilot signal sent from each base station and measuring the reception level thereof, unit which establishes a Radio Link (RL) with a base station for which the level of the received pilot signal measured by the pilot signal level measurement unit is greater than a first threshold, unit which causes a handover event, unit which executes a call connection sequence via the base station for which the Radio Link (RL) is established according to a calling direction entered via a keyboard, a comparison unit for comparing with a preset second threshold the pilot signal level received from the base station for which the Radio Link (RL) is established when the handover event occurs while the call connection sequence is being executed, and unit which continues the call connection sequence without performing the soft handover operation due to the handover event if the pilot signal level received from the base station for which the Radio Link (RL) is established is greater than the second threshold as a result of the comparison by the comparison unit, and performing the soft handover operation due to the handover event if the pilot signal level received from the base station for which the Radio Link (RL) is established is equal to or less than the second threshold, and then continuing the call connection sequence after the soft handover operation is completed.

The handover event is organized so as to occur when a second base station that can receive a greater pilot signal than the first threshold is detected by the pilot signal level measurement unit, or when the difference between the pilot signal level received from the base station for which the Radio Link (RL) is established and the pilot signal reception level from the second base station is equal to or less than a prescribed value.

The second threshold has a greater value than the first threshold for establishing the Radio Link (RL), and is set to the minimum electric field level required for the call connection to succeed.

At last there is provided a program for a control unit according to claim 3.

A characteristic of the program of the present invention for a control unit included in a mobile communication terminal device using CDMA to perform a soft handover control is to cause the execution of the process of detecting the occurrence of a handover event during a call connection operation, the process of comparing the electric field level of the currently connected Radio Link (RL) with a preset threshold when the occurrence of the handover event is detected, the process of controlling the continuation of the call connection operation if the electric level of the currently connected Radio Link (RL) is greater than the threshold, and the process of controlling the continuation of the call connection operation after performing the handover sequence in priority if the electric level of the currently connected Radio Link (RL) is equal to or less than the threshold.

The threshold is set to the minimum electric field level required for the call connection to succeed, its optimum value is determined through tests performed by terminal developing manufacturers or carriers, and is stored in advance in a memory inside the mobile communication terminal device as a preset value. Upon instruction for comparison by the program, the value is read from the memory by the control unit, and compared with the electric field level of the currently connected Radio Link (RL).

That is to say, in the present invention, when the electric level of the connected RL is at an electric level that is sufficient as not to cause failure of the call connection even if the soft handover is not performed, priority is given to the call connection sequence to prevent extra time from being taken to connect a call, whereas with such level that would cause the call connection to fail if the soft handover is not performed, priority is given to the soft handover sequence to prevent the call connection from failing.

Other objects, features and advantages of the present invention will become clear from the detailed description given herebelow.

### BRIEF DESCRIPTION OF THE DRAWINGS

The present invention will be understood more fully from the detailed description given herebelow and from the accompanying drawings of the preferred embodiment of the invention, which, however, should not be taken to be limitative to the invention, but are for explanation and understanding only.

In the drawings:
Fig. 1 is a block diagram illustrating the configuration of the embodiment of a mobile communication terminal device, such as mobile phone, to which the present invention is applied;
Fig.2 is a flow chart describing a handover control operation in the embodiment of the present invention;
Fig. 3 is a schematic diagram illustrating the partial configuration of a mobile network using CDMA;
Fig. 4 is a timing chart illustrating an example of a conventional soft handover operation; and
Fig. 5 is a flow chart illustrating the conventional soft handover operation.

### DESCRIPTION OF THE PREFERRED EMBODIMENT

The preferred embodiment of the present invention will be discussed hereinafter in detail with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to unnecessary obscure the present invention.

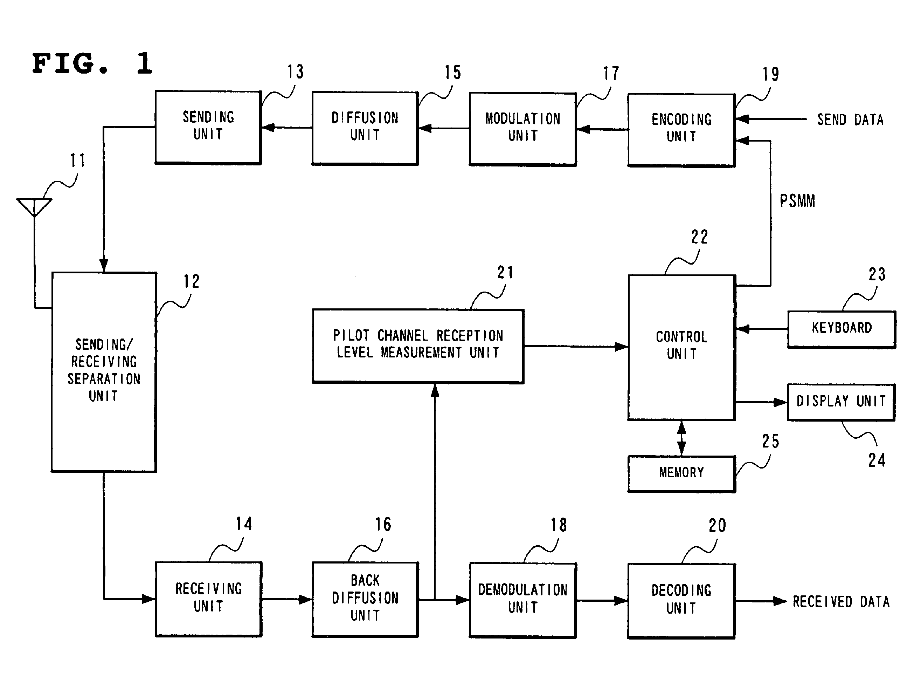

Fig. 1 is a block diagram illustrating the embodiment of a mobile communication terminal device, such as mobile phone, to which the present invention is applied. Although the basic configuration of the mobile communication terminal device is similar to that of a conventional mobile phone, Fig. 1 mainly shows only those blocks related to the description of the operation of the present invention.

In Fig. 1, a sending/receiving separation unit 12 outputs a radio frequency signal received from a base station via an antenna 11 to a receiving unit 14, and sends the radio frequency signal entered by a sending unit 13 to the base station via the antenna 11.

The receiving unit 14 performs processes such as down conversion and AGC on the signal received via the antenna 11.

A back diffusion unit 16 performs back diffusion processing on the received signal with a diffusion code assigned to each channel.

A demodulation unit 18 demodulates signals after back diffusion, such as QPSK. A decoding unit 20 performs processes of error-correction decoding and CRC on the demodulated signal, as well as decoding the received signal. Thus, received data is obtained.

The mobile communication terminal device always receives a pilot channel signal that is sent from the base station with a constant power, a pilot channel reception level measurement unit 21 measures a pilot channel signal reception level received from each base station, and outputs the measured pilot channel signal reception level data to a control unit 22.

Based on the pilot channel signal reception level data of each base station entered from the pilot channel reception level measurement unit 21, the control unit 22 controls the establishment of a Radio Link (RL), and the start and end of a soft handover; however, in the present embodiment, when the soft handover event occurs while the mobile communication terminal device is executing a call connection sequence, the control unit 22 outputs a control signal for notifying the start and end of the handover according to the after-mentioned criterion of the present invention.

Further, although not shown, in addition to the above-described control, the control unit 22 is organized as a control unit (central processing unit: CPU) that outputs various control signals to control the operation of the mobile communication terminal device to the corresponding blocks. A memory unit 25 contains various control programs for controlling the operation of the mobile communication terminal device, including the control of the present invention at the control unit 22, data for the control, or the like.

An encoding unit 19 performs convolution coding and CRC coding on the send data to form a send frame. In so doing, a control signal to notify the start or the end of the handover that is outputted from the control unit 22 to the base station, or the like, is also embedded.

A modulation unit 17 performs modulation such as QPSK on the send data. A diffusion unit 15 performs diffusion on the modulated send signal with the diffusion code assigned to each channel.

The sending unit 13 performs sending power control, up-conversion, or the like, on the diffused send signal, which, in turn, is sent to the antenna 11 via the sending/receiving separation unit 12.

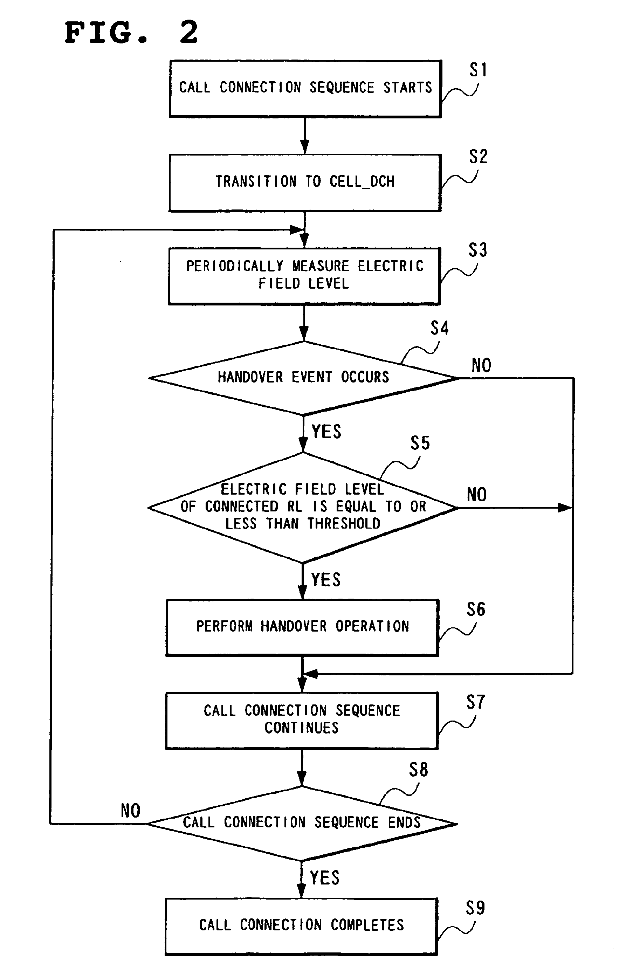

Fig. 2 is a flow chart illustrating the embodiment of the handover control operation during a call connection operation in the present invention. The handover control during the call connection operation in the present invention is performed at the control unit 22 according to the control program stored in the memory 25. The handover control operation according to the present invention will now be described assuming the mobile communication terminal device (mobile station M) is located in a mobile network using CDMA shown in Fig. 3.

The mobile communication terminal device M located in an area of the base station A is connected to the base station A by an RL (Radio Link). When a call originates by operating a key on a keyboard 23 on the mobile communication terminal device M, the control unit 22 starts a call connection sequence (Step S1), and opens a DCH. Upon transition to a CELL_DCH (Step S2) state, communication with 2RL (Radio Link) or 3RL (Radio Link) becomes possible.

If the position of the mobile communication terminal device M at the start of the call connection sequence is near an area of the base station B, upon transition to the CELL_DCH state, at the point of time when the electric field level of the pilot channel signal of the base station B becomes greater than a prescribed threshold "LADD" (second threshold), or at the point of time when the difference between the pilot channel signal reception levels from the base station A and from the base station B becomes equal to or less than, for example, 3dB, as a result of the periodically performed measurement (Step S3) of the electric level of the pilot channel signal (pilot channel signal reception level) from the base station, a handover event occurs (Step S4).

When the handover event occurs, the control unit 22 compares the pilot channel signal reception level of the RL (Radio Link) with the currently connected base station A with a prescribed threshold (first threshold) (Step S5). The threshold (first threshold) is the minimum electric level required for a call connection to succeed, and is set to a greater value than the threshold "LADD" for connecting a channel. In regard to the threshold (first threshold), an appropriate threshold can be set in advance through reception tests performed by terminal developing manufacturers or carriers.

When the threshold is set by a carrier, it is reported to a terminal by a Measurement Control or the like and stored in the memory 25, on the other hand, when the threshold is set by a terminal developing manufacturer, it is written into and stored in the memory 25 inside the terminal, in advance.

If, as a result of the comparison in Step S5, the electric field level of the RL (Radio Link) of the currently connected base station A is equal to or less than the threshold (first threshold) (YES in Step S5), the call connection sequence is interrupted and a handover operation is performed (Step S6). That is, the mobile communication terminal device M performs the handover sequence in priority by sending a pilot channel signal measurement message (PSMM) to the base station A. Then, after completion of the handover operation, the call connection sequence is resumed (Step S7).

Conversely, if the electric level of the currently connected RL (Radio Link) is greater than the threshold (NO in Step S5), it is determined that the call connection will succeed even if the handover operation is not performed, and the call connection sequence is continued without performing the handover operation (Step S7).

Thereafter, similarly, when a handover event occurs at the periodical measurement of the electric level until the call connection sequence is completed, the following operation is repeated (Step S8): the electric level of the currently connected RL and the threshold are compared, and if the electric level of the connected RL (Radio Link) is equal to or less than the threshold, the handover operation is performed, whereafter the call connection sequence is resumed, conversely, if the electric level of the connected RL is greater than the threshold, the call connection sequence is continued.

After the call connection sequence ends (YES in Step 8), a call connection is completed (Step 9) and a call state is entered, every time when a soft handover event occurs during the call, the soft handover operation is performed as usual.

According to the handover control method during a call connection operation of the present invention, when a handover event occurs during a call connection operation, if the electric field level of the connected RL (Radio Link) is above the threshold, the handover operation is not performed, thereby ensuring that the call connection sequence is executed without spending extra time on the call connection, and if the electric field level of the connected RL is equal to or less than the threshold, the handover operation is immediately performed in order to bring the electric field level of the RL to a substantially good condition before executing the call connection operation, which allows the problem of failing calls to be resolved.

## Claims

1. A soft handover control method of a mobile communication terminal device using CDMA, comprising the steps of:
periodically receiving a pilot signal sent from a base station (A, B) to measure the reception level thereof;
establishing a Radio Link (RL) with a base station (A) for which the measured level of said pilot signal is greater than a second threshold (L_{ADD}),
causing a handover event while said mobile communication terminal device is performing a call connection operation;
executing a call connection sequence (S1-S8) via the base station (A) for which said Radio Link (RL) is established according to a calling direction entered via a keyboard, said call connection sequence being executed before entering a call state in which a call connection is completed;
when a handover event (S4) occurs during execution of said call connection sequence (S1-S8), comparing the pilot signal level received from the base station (A) for which said Radio Link (RL) is established with a first threshold (L_{DROP}) which is a minimum value of the electric field level required for a call connection to succeed;
during said call connection sequence (S1-S8), when the occurrence of a handover event (S4) is detected, continuing said call connection sequence (S7) without performing the soft handover operation due to said handover event if the pilot signal level received from the base station for which said Radio Link (RL) is established is greater than said first threshold (L_{DROP}); and
interrupting said call connection sequence and performing the soft handover operation (S6) due to said handover event (S4) if the pilot signal level received from the base station for which said Radio Link (RL) is established is equal to or less than said first threshold (L_{DROP}), and continuing said call connection sequence (S7) after completion of the soft handover operation (S6);
wherein said handover event causing step causes the handover event when a second base station (B) is detected for which the measured level of said pilot signal is greater than said second threshold (L_{ADD}), or when the difference between the pilot signal level received from the base station (A) for which said Radio Link (RL) is established and the pilot signal reception level from the second base station (B) is equal to or less than a prescribed value and
wherein said second threshold (L_{ADD}) has a greater value than said first threshold (L_{DROP}) which is set to a minimum electric field level required for said call connection to succeed.

2. A mobile communication terminal device using CDMA, comprising:
a pilot signal level measurement unit (21) which periodically receives a pilot signal sent from a base station (A, B) to measure the reception level thereof;
a unit adapted to establish a Radio Link (RL) with a base station (A) for which the level of the received pilot signal measured by said pilot signal level measurement unit (21) is greater than a second threshold (L_{ADD});
a unit (22) adapted to cause a handover event while said mobile communication terminal device is performing a call connection operation;
a unit (22) adapted to execute a call connection sequence via a base station (A) for which said Radio Link (RL) is established according to a calling direction entered via a keyboard said call connection sequence being executed before entering a call state in which a call connection is completed, **characterized by** further comprising;
a unit (22) adapted to compare the pilot signal level received from the base station (A) for which said Radio Link (RL) is established with a first threshold (L_{DROP}) which is a minimum value of the electric field level required for a call connection to succeed when the handover event occurs during execution of said call connection sequence; and
a unit adapted to interrupt said call connection sequence and performing the soft handover operation due to said handover event and continuation of said call connection sequence after completion on the soft handover operation if the pilot signal level received from the base station (A) for which said Radio Link (RL) is established is equal to or less than said first threshold (L_{DROP});
wherein said handover event causing unit is adapted to (22) cause the handover event when a second base station (B) is detected for which the measured level of said pilot signal is greater than said second threshold (L_{ADD}), or when the difference between the pilot signal level received from the base station (A) for which said Radio Link (RL) is established and the pilot signal reception level from the second base station (B) is equal to or less than a prescribed value, and
wherein said second threshold (L_{ADD}) has a greater value than said first threshold (L_{DROP}) which is set to a minimum electric field level required for said call connection to succeed, **characterized by**
a unit (22) adapted to perform upon the occurrence of the handover event during execution of said call connection sequence, continuation of said call connection sequence without performing the soft handover operation due to said handover event if the pilot signal level received from the base station (A) for which said Radio Link (RL) is established is greater than said first threshold (L_{DROP})

3. A program causing when carried out in a control unit included in a mobile communication terminal device using CDMA to perform a soft handover control, comprising program code adapted to carry out:
a process of periodically receiving a pilot signal sent from a base station (A, B) to measure the reception level thereof;
a process of establishing a Radio Link (RL) with a base station (A) for which the measured level of said pilot signal is greater than a second threshold (L_{ADD});
a process of causing a handover event while said mobile communication terminal device is performing a call connection operation;
a process of executing a call connection sequence (S1-S8) via the base station (A) for which said Radio Link (RL) is established according to a calling direction entered via a keyboard said call connection sequence being executed before entering a call state in which a call connection is completed, **characterized in that**;
when a handover event (S4) occurs during execution of said call connection sequence (S1-S8), a process of comparing the pilot signal level received from the base station (A) for which said Radio Link (RL) is established with a first threshold (L_{DROP}) which is a minimum value of the electric field level required for a call connection to succeed;
during said call connection sequence (S1-S8), when the occurrence of a handover event (S4) is detected, a process of continuing said call connection sequence (S7) without performing the soft handover operation due to said handover event if the pilot signal level received from the base station for which said Radio Link (RL) is established is greater than said first threshold (L_{DROP}); and
a process of interrupting said call connection sequence and performing the soft handover operation (S6) due to said handover event if the pilot signal level received from the base station (A) for which said Radio Link (RL) is established is equal to or less than said first threshold (L_{DROP}), and continuing said call connection sequence after completion of the soft handover operation;
wherein said handover event causing process causes the handover event when a second base station (B) is detected for which the measured level of said pilot signal is greater than said second threshold (L_{ADD}), or when the difference between the pilot signal level received from the base station (A) for which said Radio Link (RL) is established and the pilot signal reception level from the second base station (B) is equal to or less than a prescribed value, and
wherein said second threshold (L_{ADD}) has a greater value than said first threshold (L_{DROP}) which is set to a minimum electric field level required for said call connection to succeed.

## Patentansprüche

1. Steuerverfahren für eine sanfte Übergabe einer mobilen Kommunikationsanschlussvorrichtung, die CDMA verwendet, mit den Schritten:
periodisches Empfangen eines Pilotsignals, das von einer Basisstation (A, B) gesendet wird, zur Messung seines Empfangspegels,
Aufbau einer Funkverbindung (RL) mit einer Basisstation (A), für die der gemessene Pegel des Pilotsignals größer als ein zweiter Schwellwert (L_{ADD}) ist,
Verursachen eines Übergabeablaufs, während die mobile Kommunikationsanschlussvorrichtung einen Rufverbindungsvorgang durchführt,
Ausführen einer Rufverbindungsfolge (S1-S8) über die Basisstation (A), für die die Funkverbindung (RL) erstellt wurde, gemäß einer Rufrichtung, die über eine Tastatur eingegeben wird, wobei die Rufverbindungsfolge vor dem Einnehmen eines Rufzustandes ausgeführt wird, in dem eine Rufverbindung vervollständigt ist,
wenn ein Übergabeablauf (S4) während der Ausführung der Rufverbindungsfolge (S1-S8) auftritt, Vergleichen des Pilotsignalpegels, der von der Basisstation (A) empfangen wurde, für die die Funkverbindung (RL) erstellt wurde, mit einem ersten Schwellwert (L_{DROP}), der ein Minimalwert des elektrischen Feldpegels ist, der für eine erfolgreiche Rufverbindung erforderlich ist,
während der Rufverbindungsfolge (S1-S8), wenn das Auftreten eines Übergabeablaufs (S4) erfasst wird, Fortsetzen der Rufverbindungsfolge (S7) ohne Durchführung des weichen Übergabevorganges aufgrund des Übergabeablaufs, falls der Pilotsignalpegel, der von der Basisstation empfangen wird, für die die Funkverbindung (RL) errichtet wurde, größer ist als der erste Schwellwert (L_{DROP}), und
Unterbrechen der Rufverbindungsfolge und Durchführung des weichen Übergabevorganges (S6) aufgrund des Übergabeablaufs (S4), falls der Pilotsignalpegel, der von der Basisstation empfangen wird, für die die Funkverbindung (RL) errichtet wurde, gleich oder kleiner ist als der erste Schwellwert (L_{DROP}) und Fortsetzen der Rufverbindungsfolge (S7) nach der Vervollständigung des weichen Übergabevorganges (S6),
wobei der Übergabeereignis-Verursachungsschritt den Übergabeablauf verursacht, wenn eine zweite Basisstation (B) erfasst wird, für die der gemessene Pegel des Pilotsignals größer ist als der zweite Schwellwert (L_{ADD}), oder wenn die Differenz zwischen dem Pilotsignalpegel, der von der Basisstation (A) empfangen wird, für die die Funkverbindung (RL) erstellt ist, und der Pilotsignalempfangspegel von der zweiten Basisstation (B) gleich oder kleiner ist als ein vorgegebner Wert, und
wobei der zweite Schwellwert (L_{ADD}) einen größeren Wert aufweist als der erste Schwellwert (L_{DROP}), der auf einen elektrischen Minimalfeldpegel eingestellt ist, der für eine erfolgreiche Rufverbindung erforderlich ist.

2. Mobile Kommunikationsanschlussvorrichtung, die CDMA verwendet, mit:
einer Pilotsignalmesseinheit (21), die periodisch ein Pilotsignal empfängt, das von einer Basisstation (A, B) gesendet wird, zur Messung seines Empfangspegels,
einer Einheit, die ausgebildet ist, um eine Funkverbindung (RL) mit einer Basisstation (A) zu erstellen, für die der Pegel des empfangenen Pilotsignals, der durch die Pilotsignalpegelmesseinheit (21) gemessen wurde, größer als ein zweiter Schwellwert (L_{ADD}) ist,
einer Einheit (22), die ausgebildet ist, um einen Übergabeablauf zu verursachen, während die mobile Kommunikationsanschlussvorrichtung einen Rufverbindungsvorgang durchführt,
einer Einheit (22), die ausgebildet ist, um eine Rufverbindungsfolge über eine Basisstation (A) auszuführen, für die die Funkverbindung (RL) erstellt ist, gemäß einer Rufrichtung, die über eine Tastatur eingegeben wird, wobei die Rufverbindungsfolge vor dem Eintreten in einen Rufzustand ausgeführt wird, in dem eine Rufverbindung vervollständigt ist, **gekennzeichnet durch** ferner
einer Einheit (22), die ausgebildet ist, um den Pilotsignalpegel, der von der Basisstation (A) empfangen wurde, für die die Radioverbindungen (L) errichtet ist, mit einem ersten Schwellwert (L_{DROP}) zu vergleichen, der ein Minimalwert eines elektrischen Feldpegels ist, der für eine erfolgreiche Rufverbindung erforderlich ist, wenn der Übergabeablauf während der Ausführung der Rufverbindungsfolge auftritt und
einer Einheit, die ausgebildet ist, um die Rufverbindungsfolge zu unterbrechen und den weichen Übergabevorgang aufgrund des Übergabeablaufs durchzuführen und die Rufverbindungsfolge nach der Vervollständigung des weichen Übergabevorgangs fortzusetzen, falls der Pilotsignalpegel, der von der Basisstation (A) empfangen wurde, für den die Funkverbindung (RL) errichtet wurde, gleich oder kleiner ist als der erste Schwellwert (L_{DROP}),
wobei die Übergabeablaufverursachungseinheit (22) ausgebildet ist, um den Übergabeablauf zu verursachen, wenn eine zweite Basisstation (B) erfasst wird, für die der gemessene Pegel des Pilotsignals größer ist als der zweite Schwellwert (L_{ADD}), oder wenn die Differenz zwischen dem Pilotsignalpegel, der von der Basisstation (A) empfangen wurde, für die die Funkverbindung (RL) errichtet wurde, und der Pilotsignalempfangspegel von der zweiten Basisstation (B) gleich oder kleiner ist als ein vorgegebener Wert, und
wobei der zweite Schwellwert (L_{ADD}) einen größeren Wert als der erste Schwellwert (L_{DROP}) aufweist, der auf einen minimalen elektrischen Feldpegel eingestellt ist, der für eine erfolgreiche Rufverbindung erforderlich ist, **gekennzeichnet durch** eine Einheit (22), die ausgebildet ist, um bei dem Auftreten des Übergabeablaufs während der Ausführung der Rufverbindungsfolge eine Fortsetzung der Rufverbindungsfolge durchzuführen, ohne den weichen Übergabevorgang aufgrund des Übergabeablaufs durchzuführen, falls der Pilotsignalpegel, der von der Basisstation (A) empfangen wird, für die die Funkverbindung (RL) errichtet ist, größer als der erste Schwellwert (L_{DROP}) ist.

3. Programm, das, wenn es in einer Steuereinheit ausgeführt wird, die in einer mobilen Kommunikationsanschlussvorrichtung enthalten ist, die CDMA verwendet, eine weichen Übergabesteuerung verursacht, wobei der Programmcode ausgebildet ist, um Auszuführen:
einen Prozess des periodischen Empfangens eines Pilotsignals, das von einer Basisstation (A, B) empfangen wird, um seinen Empfangspegel zu messen,
einen Prozess der Errichtung einer Funkverbindung (RL) mit einer Basisstation (A), für die der gemessene Pegel des Pilotsignals größer ist als ein zweiter Schwellwert (L_{ADD}),
einen Prozess des Verursachens eines Übergabeablaufs, wenn die mobile Kommunikationsanschlussvorrichtung einen Rufverbindungsvorgang durchführt,
einen Prozess der Ausführung einer Rufverbindungsfolge (S1-S8) über die Basisstation (A), für die die Funkverbindung (RL) errichtet wurde, gemäß einer Rufrichtung, die über eine Tastatur eingegeben wird, wobei die Rufverbindungsfolge ausgeführt wird bevor ein Rufzustand eingenommen wird, indem eine Rufverbindung vervollständigt ist, **dadurch gekennzeichnet, dass**
wenn ein Übergabeereignis (S4) während der Ausführung der Rufverbindungsfolge (S1-S8) auftritt, ein Prozess des Vergleichens des Pilotsignalpegel, der von der Basisstation (A) empfangen wurde, für die die Funkverbindung (RL) errichtet wurde, mit einem ersten Schwellwert (L_{DROP}), der ein Minimalwert des elektrischen Feldpegels ist, der für eine erfolgreiche Rufverbindung erforderlich ist,
während der Rufverbindungsfolge (S1-S8), wenn das Auftreten eines Übergabeereignisses (S4) erfasst wird, einen Prozess der Fortsetzung der Rufverbindungsfolge (S7) ohne Durchführung des weichen Übergabevorganges aufgrund des Übergabeablaufs, falls der Pilotsignalpegel, der von der Basisstation empfangen wurde, für die die Funkverbindung (RL) errichtet wurde, größer ist als der erste Schwellwert (L_{DROP}), und
einen Prozess der Unterbrechung der Rufverbindungsfolge und der Durchführung des weichen Übergabevorganges (S6) aufgrund des Übergabeablaufs, falls der Pilotsignalpegel der von der Basisstation (A) empfangen wurde, für die die Funkverbindungen (RL) errichtet wurde, gleich oder geringer ist als der erste Schwellwert (L_{DROP}), und Fortsetzen der Rufverbindungsfolge nach der Vervollständigung des weichen Übergabevorganges,
wobei der Übergabeablaufverursachungsprozess den Übergabeablauf verursacht, wenn eine zweite Basisstation (B) erfasst wird, für die der gemessene Pegel des Pilotsignals größer ist als der zweite Schwellwert (L_{ADD}), oder wenn die Differenz zwischen dem Pilotsignalpegel, der von der Basisstation (A) empfangen wird, für die die Funkverbindung (RL) errichtet wurde, und der Pilotsignalempfangspegel von der zweiten Basisstation (B) gleich oder größer ist als ein vorgegebener Wert und
wobei der zweite Schwellwert (L_{ADD}) einen größeren Wert aufweist als der erste Schwellwert (L_{DROP}), der auf einen minimalen elektrischen Feldpegel eingestellt ist, der für eine erfolgreiche Rufverbindung erforderlich ist.

## Revendications

1. Procédé de commande de transfert intercellulaire sans coupure d'un dispositif de terminal de communication mobile utilisant un AMRC, comprenant les étapes suivantes :
recevoir périodiquement un signal pilote envoyé depuis une station de base (A, B) afin de mesurer son niveau de réception ;
établir une liaison radio (LR) avec une station de base (A) pour laquelle le niveau mesuré dudit signal pilote est supérieur à un second seuil (L_{ADD}) ;
provoquer un événement de transfert intercellulaire pendant que ledit terminal de communication mobile réalise une opération de connexion d'appel ;
exécuter une séquence de connexion d'appel (S1 à S8) via la station de base (A) pour laquelle ladite liaison radio (LR) est établie selon une direction d'appel entrée via un clavier, ladite séquence de connexion d'appel étant exécutée avant d'entrer un état d'appel dans lequel une connexion d'appel est achevée,
lorsqu'un événement de transfert intercellulaire (S4) a lieu pendant l'exécution de ladite séquence de connexion d'appel (S1 à S8), comparer le niveau de signal pilote reçu en provenance de la station de base (A) pour laquelle ladite liaison radio (LR) est établie avec un premier seuil (L_{DROP}) qui est une valeur minimale du niveau de champ électrique requise pour qu'une connexion d'appel réussisse ;
pendant ladite séquence de connexion d'appel (S1 à S8), lorsque l'apparition d'un événement de transfert intercellulaire (S4) est détectée, continuer ladite séquence de connexion d'appel (S7) sans réaliser l'opération de transfert intercellulaire sans coupure due audit événement de transfert si le niveau de signal pilote en provenance de la station de base pour laquelle ladite liaison radio (LR) est établie est supérieur audit premier seuil (L_{DROP}) ; et
interrompre ladite séquence de connexion d'appel et réalisation de l'opération de transfert intercellulaire sans coupure (S6) due audit événement de transfert (S4) si le niveau de signal pilote reçu en provenance de la station de base pour laquelle ladite liaison radio (LR) est établie est inférieur ou égal au premier seuil (L_{DROP}), et continuation de ladite séquence de connexion d'appel (S7) après l'achèvement de l'opération de transfert intercellulaire sans coupure (S6) ;
dans lequel ladite étape provoquant ledit événement de transfert intercellulaire provoque l'événement de transfert intercellulaire lorsqu'une seconde station de base (B) est détectée pour laquelle le niveau mesuré dudit signal pilote est supérieur audit second seuil (L_{ADD}), ou lorsque la différence entre le niveau de signal pilote reçu en provenance de la station de base (A) pour lequel la liaison radio (LR) est établie et le niveau de réception de signal pilote en provenance de la seconde station de base (B) est inférieur ou égal à une valeur prescrite et
dans lequel ledit second seuil (L_{ADD}) a une valeur supérieure audit premier seuil (L_{DROP}) qui est réglé à un niveau de champ électrique minimal requis pour que ladite connexion d'appel réussisse.

2. Terminal de communication sans fil utilisant un AMRC, comprenant :
une unité de mesure de niveau de signal pilote (21) qui reçoit périodiquement un signal pilote envoyé depuis une station de base (A, B) afin de mesurer son niveau de réception ;
une unité adaptée pour établir une liaison radio (LR) avec une station de base (A) pour laquelle le niveau du signal pilote reçu mesuré par ladite unité de mesure de niveau de signal pilote (21) est supérieur à un second seuil (L_{ADD}) ;
une unité (22) adaptée pour provoquer un événement de transfert intercellulaire pendant que ledit dispositif de terminal de communication mobile est en train de réaliser une opération de connexion d'appel ;
une unité (22) adaptée pour exécuter une séquence de connexion d'appel via une station de base (A) pour laquelle ladite liaison radio (LR) est établie selon une direction d'appel entrée via un clavier, ladite séquence de connexion d'appel étant exécutée avant d'entrer un état d'appel dans lequel une connexion d'appel est achevée, **caractérisé en ce qu'**il comprend en outre ;
une unité (22) adaptée pour comparer le niveau de signal pilote reçu en provenance de la station de base (A) pour laquelle ladite liaison radio (LR) est établie avec un premier seuil (L_{DROP}) qui est une valeur minimale du niveau de champ électrique requis pour qu'une connexion d'appel réussisse lorsque l'événement de transfert intercellulaire a lieu pendant l'exécution de ladite séquence de connexion ; et
une unité adaptée pour interrompre ladite séquence de connexion d'appel et réaliser l'opération de transfert intercellulaire sans coupure en raison dudit événement de transfert intercellulaire et la continuation de ladite séquence de connexion d'appel après achèvement de l'opération de transfert intercellulaire sans coupure si le niveau de signal pilote reçu en provenance de la station de base (A) pour lequel ladite liaison radio (LR) est établie est inférieur ou égal à un premier seuil (L_{DROP}) ;
dans lequel ladite unité provoquant l'événement de transfert intercellulaire (22) est adaptée pour provoquer l'événement de transfert lorsqu'une seconde station de base (B) est détectée pour laquelle le niveau mesuré dudit signal pilote est supérieur audit second seuil (L_{ADD}), ou lorsque la différence entre le niveau de signal pilote reçu en provenance de la station de base (A) pour laquelle ladite liaison radio (LR) est établie et le niveau de réception de signal pilote en provenance de la seconde station de base (B) est inférieur ou égal à une valeur prescrite, et
dans lequel ladite seconde valeur seuil (L_{ADD}) a une valeur supérieure audit premier seuil (L_{DROP}) qui est réglée à un niveau de champ électrique minimal requis pour que ladite connexion d'appel soit réussie, **caractérisé par**
une unité (22) adaptée pour réaliser lors de l'apparition de l'événement de transfert intercellulaire pendant l'exécution de ladite séquence de connexion d'appel, la continuation de ladite séquence de connexion d'appel sans réaliser l'opération de transfert intercellulaire sans coupure en raison dudit événement de transfert intercellulaire si le niveau de signal pilote reçu en provenance de la station de base (A) pour lequel ladite liaison radio (RL) est établie est supérieur audit premier seuil (L_{DROP}).

3. Programme amenant, lorsqu'il est réalisé dans une unité de commande incluse dans un dispositif de terminal de communication mobile utilisant un AMRC, à réaliser une commande de transfert intercellulaire sans coupure, comprenant un code de programme adapté pour réaliser :
un processus de réception périodique d'un signal pilote envoyé depuis une station de base (A, B) afin de mesurer son niveau de réception ;
un processus d'établissement d'une liaison radio (LR) avec une station de base (A) pour laquelle le niveau mesuré dudit signal pilote est supérieur à un second seuil (L_{ADD}) ;
un processus de provocation d'un événement de transfert pendant que ledit terminal de communication mobile réalise une opération de connexion d'appel ;
un processus d'exécution d'une séquence de connexion d'appel (S1 à S8) via la station de base (A) pour laquelle ladite liaison radio (LR) est établie selon une direction d'appel entrée via un clavier, ladite séquence de connexion d'appel étant exécutée avant d'entrer un état d'appel dans lequel une connexion d'appel est achevée, **caractérisé en ce que** ;
lorsqu'un événement de transfert intercellulaire (S4) a lieu pendant l'exécution de ladite séquence de connexion d'appel (S1 à S8), un processus de comparaison du niveau de signal pilote reçu en provenance de la station de base (A) pour laquelle ladite liaison radio (LR) est établie avec un premier seuil (L_{DROP}) qui est une valeur minimale du niveau de champ électrique requise pour qu'une connexion d'appel réussisse ;
pendant ladite séquence de connexion d'appel (S1 à S8), lorsque l'apparition d'un événement de transfert intercellulaire (S4) est détectée, un processus de continuation de ladite séquence de connexion d'appel (S7) sans réaliser l'opération de transfert intercellulaire sans coupure due audit événement de transfert intercellulaire si le niveau de signal pilote en provenance de la station de base pour laquelle ladite liaison radio (LR) est établie est supérieur audit premier seuil (L_{DROP}) ; et
un processus d'interruption de ladite séquence de connexion d'appel et de réalisation de l'opération de transfert intercellulaire sans coupure (S6) due audit événement de transfert intercellulaire si le niveau de signal pilote reçu en provenance de la station de base (A) pour laquelle ladite liaison radio (LR) est établie est inférieur ou égal au premier seuil (L_{DROP}), et de continuation de ladite séquence de connexion d'appel après que l'achèvement de l'opération de transfert intercellulaire sans coupure ;
dans lequel ledit processus provoquant l'événement de transfert intercellulaire provoque l'événement de transfert intercellulaire lorsqu'une seconde station de base (B) est détectée pour laquelle le niveau mesuré dudit signal pilote est supérieur audit second seuil (L_{ADD}), ou lorsque la différence entre le niveau de signal pilote reçu en provenance de la station de base (A) pour lequel la liaison radio (LR) est établie et le niveau de réception de signal pilote en provenance de la seconde station de base (B) est inférieur ou égal à une valeur prescrite, et
dans lequel ledit second seuil (L_{ADD}) a une valeur supérieure audit premier seuil (L_{DROP}) qui est réglé à un niveau de champ électrique minimal requis pour que ladite connexion d'appel réussisse.
